# EUROPÄISCHE PATENTSCHRIFT

(11) **EP 1 401 845 B1**
(45) Veröffentlichungstag und Bekanntmachung des Hinweises auf die Patenterteilung: **13.04.2005**
(21) Anmeldenummer: 02754733.0
(22) Anmeldetag: 21.06.2002
(51) Int. Cl.: C07F 9/38, C07F 9/40

(54) **VERFAHREN ZUR HERSTELLUNG VON N-PHOSPHONOMETHYLGLYCIN**
METHOD FOR PRODUCING N-PHOSPHONOMETHYLGLYCINE
PROCEDE POUR LA PRODUCTION DE N-PHOSPHONOMETHYLGLYCINE

(30) Priorität: 22.06.2001 DE 10130135
(43) Veröffentlichungstag der Anmeldung: 31.03.2004
(73) Patentinhaber: BASF AKTIENGESELLSCHAFT, 67056 Ludwigshafen (DE)
(72) Erfinder: WULFF, Christian, 68163 Mannheim (DE); ORSTEN, Stefan, 67158 Ellerstadt (DE); OFTRING, Aflred, 67098 Bad Dürkheim (DE); ZEHNER, Peter, 67071 Ludwigshafen (DE)
(74) Vertreter: Reitstötter - Kinzebach & Partner (GbR)
(86) Internationale Anmeldenummer: PCT/EP2002/006902
(87) Internationale Veröffentlichungsnummer: WO 2003/000703

(56) Entgegenhaltungen:
- EP-A- 0 097 522
- EP-A- 0 104 775
- EP-A- 0 149 294
- WO-A-01/47938
- US-A- 5 053 529

## Beschreibung

Die Erfindung betrifft ein Verfahren zur Herstellung von N-Phosphonomethylglycin durch Umsetzung einer Hexahydrotriazinverbindung mit einem Triazylphosphit in einem organischen Lösungsmittel und verseifung der dabei entstehenden Phosphonoverbindung nach vorheriger Extraktion in eine wässrige Phase und Abtrennung von der organischen Phase.

N-Phosphonomethylglycin (Glyphosate) ist ein in großem Umfang eingesetztes Totalherbizid. Zahlreiche Verfahren zur Herstellung von Phosphonomethylglycin sind bekannt. Eine Herstellungsmöglichkeit besteht darin, Hexahydrotriazinderivate mit Phosphorigsäureestern zur Reaktion zu bringen. So beschreibt die US 4,181,800 die Herstellung von Hexahydrotriazinen der Formel: 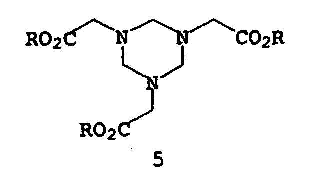 und die US 4,053,505 die Umsetzung dieser Hexahydrotriazine mit Phosphorigsäurediestern und anschließende Hydrolyse des erhaltenen Produktes zu Phosphonomethylglycin. Es hat sich gezeigt, daß sowohl Ausbeute als auch Selektivität zugunsten des monophosphonierten Produktes verbesserungswürdig sind. Außerdem sind Phosphorigsäurediester sehr teuer.

EP-A-104 775 (entsprechend US 4,425,284, US 4,482,504 und US 4,535,181) beschreibt die Umsetzung obiger Hexahydrotriazine mit einem Acylhalogenid und die anschließende Phosphonierung mit einem Phosphorigsäuretriester und Verseifung zu Phosphonomethylglycin gemäß folgender Reaktionsgleichung:

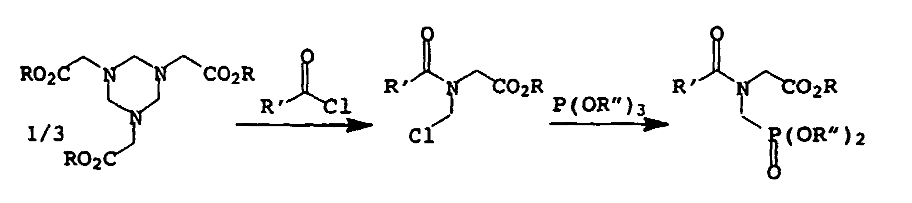

Man erhält auf diese Weise zwar Phosphonomethylglycin in relativ guter Ausbeute, das Verfahren erfordert jedoch neben der Verwendung der teuren Phosphorigsäureester noch zusätzlich den Einsatz eines Carbonsäurechlorides. Hinzukommt, daß das Carbonsäurechlorid allenfalls in Form der freien Säure zurückgewonnen und dann in einem separaten Schritt wieder in das Säurechlorid überführt werden könnte, was die Kosten des Verfahrens erheblich erhöht. Ferner kann der Alkohol, mit dem die Phosphorigsäure verestert ist, nicht vollständig recycliert werden, da bei der Reaktion ein Äquivalent des entsprechenden Alkylchlorids entsteht, welches zudem toxikologisch bedenklich ist.

Die US 4,428,888 (entsprechend EP-A-149 294) beschreibt die Umsetzung des oben erwähnten Hexahydrotriazins mit einem Phosphorigsäurechlorid in Anwesenheit einer starken wasserfreien Säure, beispielsweise Chlorwasserstoff und einer C₁-C₆-Carbonsäure, wie Essigsäure. Auf diese Weise erhält man zahlreiche undefinierte Nebenprodukte, welche die Ausbeute an Phosphonomethylglycin erniedrigen und eine aufwendige Reinigung des Produktes erfordern.

Die US 4,442,044 beschreibt die Umsetzung eines Hexahydrotriazins der Formel 5 mit einem Phosphorigsäuretriester zu der entsprechenden Phosphonatverbindung, die als Herbizid verwendet wird.

In der DD-A-141 929 und DD-A-118 435 ist die Umsetzung eines Alkalimetallsalzes des obigen Hexahydrotriazins (R = beispielsweise Na) mit einem Phosphorigsäurediester beschrieben. Aufgrund der schlechten Löslichkeit der Alkalisalze erhält man jedoch einen nur geringen Umsatz.

Die US 5,053,529 beschreibt die Herstellung von Phosphonomethylglycin durch Umsetzung obiger Hexahydrotriazine mit Phosphorigsäuretriestern in Gegenwart von Titantetrachlorid und anschließende Verseifung des erhaltenen Produktes. Die Verwendung von Titantetrachlorid verteuert die Herstellung erheblich. Außerdem sind die Ausbeuten an Phosphonomethylglycin unbefriedigend.

Die US 4,454,063, US 4,487,724 und US 4,429,124 beschreiben die Herstellung von Phosphonomethylglycin durch Umsetzung einer Verbindung der Formel 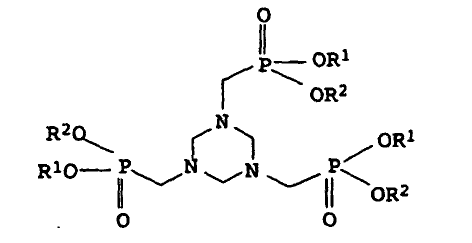 worin R¹ und R² aromatische oder aliphatische Gruppen bedeuten, mit RCOX (X = Cl, Br, I) zu einer Verbindung der Formel

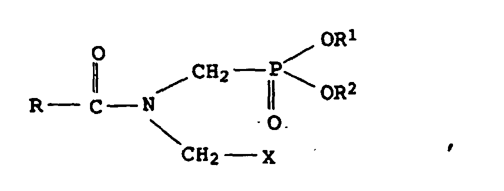

Reaktion dieser Verbindung mit einem Metallcyanid und Hydrolyse des erhaltenen Produktes. Die Nachteile dieses Verfahrens sind wie oben bezüglich der Verwendung des Säurechlorids angegeben.

Weitere Synthesemöglichkeiten sind ausgehend von dem Cyanomethyl-substituierten Hexahydrotriazin der Formel 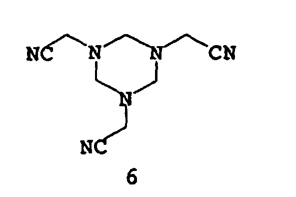 beschrieben. So offenbaren die US 3,923,877 und US 4,008,296 die Umsetzung dieses Hexahydrotriazinderivates mit einem Dialkylphosphonat in Gegenwart eines sauren Katalysators, wie Chlorwasserstoff, einer Lewis-Säure, einem Carbonsäurechlorid oder -anhydrid, zu einer Verbindung der Formel:

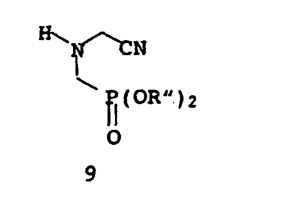

Anschließende Hydrolyse ergibt das Phosphonomethylglycin, wobei 8 bis 10% des zweifach phosphonomethylierten Produktes entstehen.

Die US 4,067,719, US 4,083,898, US 4,089,671 und DE-A-2751631 beschreiben die Umsetzung des Cyanomethyl-substituierten Hexahydrotriazins mit einem Diarylphosphonat ohne Katalysator zu einer Verbindung 9 mit R" = Aryl. Dieses Verfahren weist die gleichen oben für die Verwendung des Carboxy-substituierten Hexahydrotriazins 5 beschriebenen Nachteile auf.

Die EP-A-097 522 (entsprechend US 4,476,063 und US 4,534,902) beschreibt die Umsetzung des Hexahydrotriazins 6 mit einem Acylhalogenid zu 10, anschließende Phosphonierung mit einem Phosphorigsäuretriester oder -diester zu 11 und schließlich Verseifung zu Phosphonomethylglycin gemäß folgender Reaktionsgleichung:

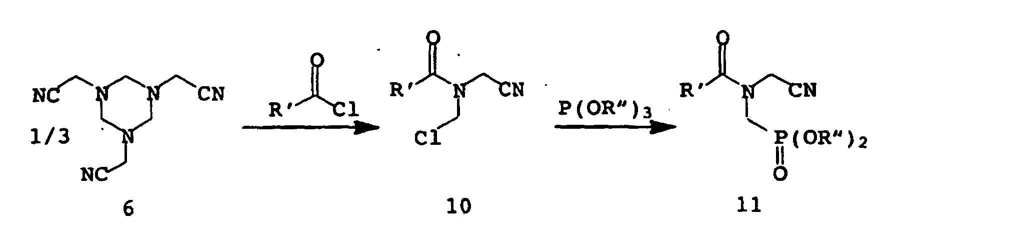

Auch hier sind die gleichen Nachteile zu beobachten wie für die Verfahren unter Verwendung der Carboxy-substituierten Hexahydrotriazinderivate.

Schließlich beschreibt die US 4,415,503 die Umsetzung des Cyanomethyl-substituierten Hexahydrotriazins analog zu dem in der US 4,428,888 beschriebenen Verfahren. Auch in diesem Fall ist die verstärkte Bildung von Nebenprodukten zu beobachten.

Die EP 164 923 A beschreibt eine verbesserte Hydrolyse einer Verbindung der Formel 11.

In der DE 199 62 601 ist ein Verfahren zur Herstellung von N-Phosphonomethylglycin beschrieben, bei dem man
a) ein Hexahydrotriazinderivat der Formel II 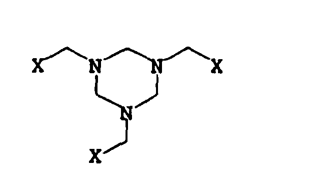 worin X für CN, COOZ, CONR¹R² oder CH₂OY steht,
   Y für H oder einen Rest steht, der leicht gegen H austauschbar ist;
   Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
   R¹ und R², die gleich oder verschieden sein können, für H oder C₁-C₄-Alkyl stehen,
   mit einem Triacylphosphit der Formel III

   P(OCOR³)₃

   worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen,
   zu einer Verbindung der Formel I 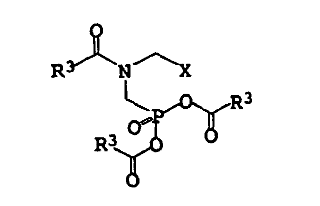 worin R³ und X die oben angegebenen Bedeutungen besitzen, umsetzt und
b) die Verbindung der Formel I hydrolysiert und, falls X für CH₂OY steht, oxidiert.

Schritt (a) des Verfahrens wird vorzugsweise in einem inerten organischen Lösungsmittel durchgeführt, besonders bevorzugt in einem halogenierten Lösungsmittel, wie z.B. 1,2-Dichlorethan. Die Hydrolyse gemäß Schritt (b) (Verseifung) kann alkalisch, neutral oder sauer erfolgen.

Nach der Verseifung sollte N-Phosphonomethylglycin bevorzugt in wässriger Lösung vorliegen. Das in Schritt (a) verwendete Lösungsmittel muss vor oder nach der Verseifung abgetrennt werden. Wenn es bei der Verseifung anwesend ist, sollte es, insbesondere aus Gründen der Kostenminimierung, nicht verbraucht oder zersetzt werden. Daher wird gemäß einer Verfahrensvariante das in Schritt (a) verwendete Lösungsmittel vor der Verseifung, d.h. vor Schritt (b) teilweise oder vollständig abdestilliert und der Rückstand hydrolysiert. Nach einer weiteren, bevorzugten Verfahrensvariante erfolgt die Hydrolyse in einem wässrig/organischen Zweiphasensystem. Nach beendeter Hydrolyse werden die beiden Phasen getrennt und aufgearbeitet. N-Phosphonomethylglycin befindet sich in der wässrigen Phase.

Wird das Lösungsmittel durch Destillation abgetrennt, so ist der Energieverbrauch des Verfahrens sehr hoch, daher ist die Abtrennung nach der Verseifung durch Phasentrennung wirtschaftlicher. Verwendet man jedoch als Lösungsmittel chlorierte Kohlenwasserstoffe, z.B. 1,2-Dichlorethan, so hat das Lösungsmittel nur eine begrenzte Stabilität unter den Verseifungsbedingungen.

Die mangelnde Stabilität chlorierter Kohlenwasserstoffe unter Verseifungsbedingungen ist seit langem bekannt. So beschreiben z.B. H. Bahr und H. Zieler in Angew. Chem. 1930, 43, 286, dass Dichlorethan bei Temperaturen ab 150°C merklich zu Ethylenglycol umgesetzt wird. Aus der DE 537 448 ist die Verseifung von Dichlorethan zu Glycol mit Wasser bei Temperaturen oberhalb 120°C bekannt, wobei die Konzentration der entstehenden Salzsäure bei unter 4 % gehalten wird. In der DE 540 513 ist die Herstellung von Glycol aus Cyanhydrinen durch Hydrolyse in Gegenwart von Alkalilauge bei 80 bis 100 °C beschrieben.

Aus den angegebenen Beispielen kann man folgern, dass besonders bei Verwendung neutraler oder alkalischer Verseifungsbedingungen mit einer Zersetzung des Lösungsmittels zu rechnen ist. Aus Sicht der Einsatzstoffkosten sind aber besonders die neutralen Verseifungsbedingungen, bei denen das Mono-ammoniumsalz entsteht, und die alkalischen Verseifungsbedingungen bei denen z.B. bei Verwendung von Natronlauge das Mono-natriumsalz von N-Phosphonomethylglycin entsteht, zu bevorzugen. Beide sind gut löslich in Wasser, und aus ihren Lösungen kann N-Phosphonomethylglycin durch Zugabe nur eines Äquivalents Säure ausgefällt werden. Somit entsteht nur 1 Mol Salz pro Mol N-Phosphonomethylglycin. Bei der sauren Verseifung ist ein größerer Überschuß Säure notwendig, was zu einer höheren Salzfracht der Abwässer und höheren Einsatzstoffkosten führt. Andererseits müssen die neutrale und die alkalische Verseifung wegen der Zersetzungsneigung des Lösungsmittels unter sehr milden Bedingungen durchgeführt werden, was die Reaktionszeiten beträchtlich erhöht.

Aufgabe der vorliegenden Erfindung ist es daher, ein in ökonomischer und ökologischer Hinsicht verbessertes Verfahren zur Herstellung von N-Phosphonomethylglycin bereitzustellen.

Aufgabe der vorliegenden Erfindung ist es außerdem, ein Verfahren zur Herstellung von N-Phosphonomethylglycin bereitzustellen, bei dem eine Zersetzung des organischen Lösungsmittels vermieden wird und das Produkt in hoher Reinheit anfällt.

Die vorliegende Erfindung betrifft daher ein Verfahren zur Herstellung von N-Phosphonomethylglycin, bei dem man
a) ein Hexahydrotriazinderivat der Formel II 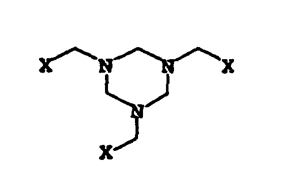 worin X für CN, COOZ, CONR¹R² oder CH₂OY steht
   Y für H, einen aliphatischen oder aromatischen Acylrest oder eine C₁-C₆-Alkylgruppe steht;
   Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
   R¹ und R², die gleich oder verschieden sein können, für H oder C₁-C₄-Alkyl stehen,
   mit einem Triacylphosphit der Formel III

   P(OCOR³)₃

   worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen,
   zu einer Verbindung der Formel I 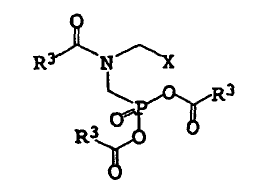 worin R³ und X die oben angegebenen Bedeutungen besitzen, in einem organischen Lösungsmittel umsetzt,
b) das erhaltene Reaktionsgemisch mit Wasser oder einer wässrigen Lösung einer Säure oder einer wässrigen Lösung einer Base extrahiert,
c) die Phasen trennt und
d) das in der Wasserphase enthaltene Produkt hydrolysiert oder weiter hydrolysiert.

Nach Schritt (d) wird N-Phosphonomethylglycin aus der Wasserphase gewonnen.

Sonstige in der Wasserphase enthaltene verwertbare und/oder rückführbare Komponenten werden bevorzugt ebenfalls aus der Wasserphase abgetrennt und gegebenenfalls in das Verfahren zurückgeführt.

Falls X in der Formel II für CH₂OY steht, ist das nach der Hydrolyse erhaltene Produkt noch zu oxidieren.

Alkyl bedeutet eine gerade oder verzweigte Alkylkette mit vorzugsweise 1 bis 8 Kohlenstoffatomen und insbesondere 1 bis 4 Kohlenstoffatomen. Beispiele für Alkyl sind Methyl, Ethyl, n-Propyl, i-Propyl, n-Butyl, i-Butyl, sek-Butyl, t-Butyl, n-Hexyl, 2-Ethyl-hexyl.

Aryl steht vorzugsweise für Phenyl und Naphthyl.

X steht vorzugsweise für CN oder COOZ.

Z steht vorzugsweise für H, Alkalimetall oder C₁-C₁₈-Alkyl.

Wenn Y für einen aliphatischen Acylrest steht, handelt es sich vorzugsweise um einen C₁-C₆-CO-Rest, bei dem aromatischen Acylrest handelt es sich vorzugsweise um den Benzoylrest.

R¹ und R² stehen vorzugsweise für H.

R³ steht vorzugsweise für Phenyl, das gegebenenfalls durch C₁-C₄-Alkyl, NO₂ oder OC₁-C₄-Alkyl substituiert ist, oder für CH₃.

Bei dem Rest R³ handelt es sich besonders bevorzugt um einen Arylrest, der gegebenenfalls wie oben angegeben, substituiert sein kann. Besonders geeignete Reste R³ sind Phenyl, p-Tolyl und p-Nitrophenyl.

Die Verbindungen der Formel II sind bekannt und können in bekannter Weise oder analog zu bekannten Verfahren hergestellt werden, siehe z.B. den eingangs genannten Stand der Technik. Beispielsweise kann man ein Amin X-CH₂-NH₂ mit einer Formaldehydquelle, wie wässrige Formalinlösung oder Paraformaldehyd, zur Reaktion bringen, beispielsweise durch Lösen des primären Amins in der wässrigen Formalinlösung. Das gewünschte Hexahydrotriazin kann anschließend durch Kristallisation oder Abdampfen des Wassers gewonnen werden. Dieses Verfahren ist in der DE-A-2645085 entsprechend der US 4,181,800 beschrieben, auf die hiermit in vollem Umfang Bezug genommen wird.

Die Verbindung der Formel II, worin X für CN steht, kann durch Strecker-Synthese erhalten werden, d.h. durch Umsetzung von Ammoniak, Blausäure und einer Formaldehydquelle. Ein derartiges Verfahren ist beispielsweise in der US 2,823,222 beschrieben, auf die hiermit in vollem Umfang Bezug genommen wird.

Die Verbindungen der Formel III lassen sich nach mehreren Verfahren herstellen. Eine erste Möglichkeit ist die Umsetzung eines Salzes einer Carbonsäure R³COOH mit einem Phosphortrihalogenid, insbesondere Phosphortrichlorid. Als Carbonsäuresalz verwendet man vorzugsweise ein Alkalimetall- oder Erdalkalimetallsalz, insbesondere das Natrium-, Kalium- oder Calciumsalz, oder das Ammoniumsalz. Man kann diese Umsetzung ohne Verwendung eines Lösungsmittels durchführen und das erhaltene Reaktionsprodukt direkt in Schritt (a) einsetzen. Vorzugsweise arbeitet man jedoch in einem inerten organischen Lösungsmittel, insbesondere in einem Ether, wie Dioxan, Tetrahydrofuran etc., einem halogenierten, insbesondere einem chlorierten oder fluorierten organischen Lösungsmittel, wie Dichlormethan, 1,2-Dichlorethan, 1,2-Dichlorpropan, 1,1,1-Trichlorethan, 1,1,2-Trichlorethan, 1,1,2,2-Tetrachlorethan, Chlorbenzol oder 1,2-Dichlorbenzol, einem aliphatischen oder aromatischen Kohlenwasserstoff, wie n-Octan, Toluol, Xylol, oder Nitrobenzol. Vorzugsweise verwendet man das gleiche Lösungsmittel wie anschließend in Schritt (a). Besonders bevorzugt ist die Verwendung eines chlorierten Kohlenwasserstoffs.

Das bei der Umsetzung entstehende Salz, beispielsweise Natriumchlorid bei Verwendung von Phosphortrichlorid und dem Natriumsalz der eingesetzten Carbonsäure, kann nach der Umsetzung ausgeschleust werden. Erhält man als Salz Ammoniumchlorid oder ein anderes Ammoniumhalogenid, so kann man den eingesetzten Ammoniak zurück gewinnen, indem man eine wässrige Lösung des Salzes mit einer starken Base, beispielsweise Natronlauge, alkalisch stellt (pH 11 bis 14) und anschließend den Ammoniak in üblicher Weise ausstrippt. Der auf diese Weise erhaltene Ammoniak kann nach Trocknung, beispielsweise durch Destillation in flüssigem oder gasförmigem Zustand, oder als wässrige Lösung wieder zurück geführt und zur Herstellung des Ammoniumsalzes der Carbonsäure verwendet werden.

Eine weitere Möglichkeit zur Herstellung der Verbindungen der Formel III ist die Umsetzung einer Carbonsäure R³COOH mit dem Phosphortrihalogenid in Gegenwart eines Amins. Als Amin verwendet man insbesondere aliphatische oder cycloaliphatische Di- oder Triamine, wie Triethylamin, Tributylamin, Dimethylethylamin oder Dimethylcyclohexylamin, sowie Pyridin. Im Allgemeinen arbeitet man bei einem derartigen Verfahren in einem organischen Lösungsmittel. Geeignete Lösungsmittel sind oben im Zusammenhang mit der ersten Herstellungsmöglichkeit angegeben. Bevorzugt verwendet man Dioxan, 1,2-Dichlorpropan, 1,2-Dichlorethan, Nitrobenzol oder Toluol. Bei Verwendung eines Lösungsmittels fällt das gebildete Aminhydrochlorid aus und kann abfiltriert werden. Behandelt man die Aminhydrochloride mit einer starken Base, beispielsweise mit wässeriger Natronlauge, so werden die Amine aus dem Hydrochlorid freigesetzt. Flüchtige Amine kann man dann durch Destillation oder Extraktion zurück gewinnen. Nicht flüchtige Amine kann man durch Extraktion oder, wenn bei der Aminfreisetzung ein Zweiphasengemisch erhalten wird, durch Phasentrennung zurück gewinnen. Feste Amine können durch Abfiltrieren zurück gewonnen werden. Die zurück gewonnenen Amine kann man, gegebenenfalls nach Trocknung, wieder in das Verfahren zurück führen.

Eine weitere Möglichkeit der Herstellung der Verbindungen der Formel III ist die Umsetzung der Carbonsäure R³COOH mit einem Phosphortrihalogenid, insbesondere Phosphortrichlorid, ohne Zusatz einer Base. Bei dieser Umsetzung ist es erforderlich, den sich bildenden Halogenwasserstoff aus dem Reaktionsgemisch zu entfernen. Dies kann in üblicher Weise erfolgen, beispielsweise durch Durchleiten eines inerten Gases, wie Stickstoff. Der freigesetzte Halogenwasserstoff kann dann, falls sauer verseift werden soll, in Form einer wässrigen Lösung zur Hydrolyse in Schritt (d) verwendet werden.

Schritt (a) des erfindungsgemäßen Verfahrens wird in einem inerten organischen Lösungsmittel durchgeführt, bei dem es sich um ein mit Wasser mischbares und vorzugsweise um ein mit Wasser nicht mischbares Lösungsmittel handeln kann. Beispiele für geeignete Lösungsmittel sind Kohlenwasserstoffe, wie Toluol oder Xylol, Ether, wie Tetrahydrofuran, Dioxan oder Dibutylether, Nitrobenzol etc. Besonders bevorzugt arbeitet man in einem halogenierten Lösungsmittel, vorzugsweise einem chlorierten und/oder fluorierten aliphatischen Kohlenwasserstoff, wie Dichlormethan, 1,2-Dichlorethan, 1,2-Dichlorpropan, 1,1,1-Trichlorethan, 1,1,2,2-Tetrachlorethan, Chlorbenzol oder 1,2-Dichlorbenzol. Besonders bevorzugt ist 1,2-Dichlorethan.

Die Reaktionspartner werden zweckmäßigerweise in im Wesentlichen stöchiometrischen Mengen eingesetzt. Man kann jedoch auch einen Überschuß von beispielsweise bis zu 10 % des einen oder des anderen Reaktionspartners verwenden. Die Reaktionstemperatur liegt im Allgemeinen im Bereich von -10 °C bis 140 °C, vorzugsweise im Bereich von Raumtemperatur bis 100 °C. Unter diesen Bedingungen sind nur kurze Reaktionszeiten erforderlich, im Allgemeinen ist die Reaktion nach 10 bis 30 min im Wesentlichen vollständig.

Die gemäß Schritt (a) erhaltenen Verbindungen der Formel I sind brauchbare Zwischenprodukte zur Herstellung von N-Phosphonomethylglycin. Zur Überführung in Phosphonomethylglycin wird das aus Schritt a) erhaltene Reaktionsgemisch zunächst einer Extraktion unterworfen (Schritt b)). Diese kann sauer, neutral oder alkalisch erfolgen. Die pH-Bedingungen können dabei den gewünschten Bedingungen bei der nachfolgenden Verseifung entsprechen, man kann aber auch in einem anderen pH-Bereich extrahieren, als in dem in dem nachfolgend verseift wird. Beispielsweise kann man im sauren oder neutralen Bereich extrahieren, dann eine Base zugeben und im alkalischen Bereich verseifen.

Die Extraktion wird bevorzugt bei einer Temperatur von Raumtemperatur bis zur Rückflußtemperatur des Reaktionsgemisches durchgeführt, besonders bevorzugt bei mindestens 50 °C. Der Phasenübergang der Phosphonoverbindung I in die Wasserphase verläuft sehr schnell: bei einer Phosphonoverbindung I mit X = CN und R³ = Phenyl befinden sich bei Extraktion in Wasser bei 50 °C bereits nach 10 min über 95 % des gesamten Phosphors in der wässrigen Phase, bei Rückflußtemperatur nach 10 min bereits fast 99 %.

Im Allgemeinen sind, je nach Temperatur, Extraktionszeiten von wenigen Minuten, z.B. ab 5 min ausreichend. Bevorzugt beträgt die Extraktionszeit mindestens 10 Minuten, besonders bevorzugt mindestens 1 Stunde. Insbesondere bei Extraktion bei tiefen Temperaturen kann eine längere Extraktionszeit erforderlich sein, z.B. mindestens 2 Stunden.

Während der Extraktion wird zumindest ein Teil der Phosphonoverbindung der Formel I in der Regel bereits partiell verseift. Unter partieller Verseifung ist zu verstehen, daß nur ein Teil der im Produkt der Stufe a) enthaltenen R³CO-Reste abgespalten wird. Das Ausmaß der Verseifung ist abhängig von der Phosphonoverbindung selbst und den gewählten Extraktionsbedingungen. Bei der Verbindung I mit X = CN und R³ = Phenyl liegen nach 10-minütiger Extraktion, je nach Extraktionsbedingungen, bereits 45 bis 50 % der gesamten Benzoesäure in freier Form vor.

Als Säuren verwendet man bei der Extraktion insbesondere anorganische Säuren wie Salzsäure, Schwefelsäure oder Phosphorsäure. Die alkalische Extraktion erfolgt im Allgemeinen unter Verwendung eines Alkali- oder Erdalkalimetallhydroxids, insbesondere unter Verwendung von Natrium- oder Kaliumhydroxid.

Eine Zersetzung des in Schritt (a) verwendeten Lösungsmittels findet bei der Extraktion im Wesentlichen nicht statt, auch dann nicht wenn es sich dabei um einen besonders zersetzungsempfindlichen chlorierten Kohlenwasserstoff handelt.

Anschließend werden die wässrige und die organische Phase voneinander getrennt (Stufe c)). Man erhält eine organische Phase, die gegebenenfalls darin lösliche Verunreinigungen enthält, welche somit auf einfache Weise vom Wertprodukt abgetrennt werden. Die wässrige Phase enthält das Produkt der Stufe a) und gegebenenfalls dessen partiell verseiftes Produkt. Die Phasentrennung erfolgt in üblicher, dem Fachmann bekannter Weise. Die sich in der Wasserphase befindende Verbindung I bzw. das partiell verseifte Produkt wird dann hydrolysiert (Stufe d)). Zu der Wasserphase kann, je nach gewünschten Verseifungsbedingungen, Säure oder Base zugegeben werden. Wegen des hohen erforderlichen Säureüberschusses bei saurer Verseifung ist die Verseifung unter neutralen oder alkalischen Bedingungen bevorzugt.

Die Verseifung wird, um die gewünschten Reaktionstemperaturen zu erzielen, unter erhöhtem Druck durchgeführt. Vorzugsweise ist die Reaktionstemperatur bei der Verseifung höher als bei der Extraktion. Im Allgemeinen ist die Reaktionstemperatur um mindestens 20 °C, insbesondere mindestens 30 °C höher als bei der Extraktion. Bevorzugte Reaktionstemperaturen liegen im Bereich zwischen 100 und 180 °C, besonders bevorzugt zwischen 130 und 150 °C. Die Reaktionszeit beträgt bevorzugt zwischen etwa 5 Minuten und 4 Stunden, besonders bevorzugt 10 Minuten bis 2 Stunden, ganz besonders bevorzugt etwa 20 Minuten.

Bei der Verseifung werden neutrale oder basische Bedingungen bevorzugt. Bei basischer Verseifung verwendet man die Base bevorzugt in im Wesentlichen äquivalenten Mengen.

Als Säuren und Basen für die Verseifung verwendet man im Allgemeinen die oben im Zusammenhang mit der Extraktion angegebenen Säuren oder Basen.

Auf milde Verseifungsbedingungen braucht nicht geachtet zu werden, da kein organisches Lösungsmittel, das zersetzt werden könnte, anwesend ist.

Falls X für CH₂OY steht, ist das nach der Hydrolyse erhaltene Produkt noch zu oxidieren. Insbesondere geht man dabei von einer Verbindung aus, in der X für CH₂OH steht. Die Oxidation zu Phosphonomethylglycin erfolgt in üblicher, dem Fachmann bekannter Weise, beispielsweise durch katalytische Dehydrierung unter Kupfer-Katalyse.

Falls X für CH₂OY und Y für einen Acylrest stehen, erfolgt bei der Hydrolyse des Produktes aus Schritt a) die Abspaltung des Acylrestes unter Bildung der entsprechenden Verbindung mit X = CH₂OH. Diese wird wie oben angegeben zu Phosphonomethylglycin oxidiert.

Falls X für CH₂OY und Y für einen Alkylrest stehen, erfolgt die Etherspaltung normalerweise gleichzeitig unter den Bedingungen einer sauren Hydrolyse des Produktes aus Schritt a). Die erhaltene Verbindung mit X = CH₂OH wird wie oben angegeben zu Phosphonomethylglycin oxidiert.

Nach beendeter Hydrolyse wird das N-Phosphonomethylglycin, das nach der Hydrolyse in Form eines Salzes vorliegt, aus der Wasserphase abgetrennt. Dies erfolgt bevorzugt durch geeignetes Einstellen des pH-Werts.

Das Phosphonomethylglycin kann durch Einstellen der wäßrigen Phase auf einen pH-Wert im Bereich von 0,5 bis 2,0, insbesondere 0,8 bis 1,5, z.B. durch Zugabe einer Säure oder Base, z.B. HCl, H₂SO₄ oder NaOH, KOH, Ca(OH)₂ und gegebenenfalls durch Einengen der wässrigen Phase und/oder durch Zugabe eines Fällungshilfsmittels ausgefällt und in üblicher Weise gewonnen werden, beispielsweise durch Filtration. Als Fällungshilfsmittel verwendet man vorzugsweise ein mit Wasser mischbares Lösungsmittel, wie Methanol, Ethanol, Isopropanol, Aceton etc. Die Lösungsmittel können aus der Mutterlauge destillativ zurück gewonnen und wieder verwendet werden.

Bei der verseifung entstandener Ammoniak oder entstandenes Ammoniumchlorid kann dem Verfahren wieder zugeführt werden, indem gegebenenfalls alkalisch gestellt und der Ammoniak durch Ausstrippen zurückgewonnen wird.

Falls erforderlich, kann das erhaltene Phosphonomethylglycin in üblicher Weise entfärbt werden. Dies kann beispielsweise durch Behandlung mit geringen Mengen eines Entfärbungsmittels, z.B. Oxidationsmittel, wie Perborate oder H₂O₂, oder Adsorbentien, wie Aktivkohle, erfolgen. Die Menge an Entfärbungsmittel richtet sich nach dem Grad der Verfärbung und kann vom Fachmann in einfacher Weise bestimmt werden. Die Behandlung mit dem Entfärbungsmittel kann an beliebiger Stelle nach der Hydrolyse und in üblicher Weise erfolgen. Zweckmäßigerweise gibt man das Entfärbungsmittel vor Ausfällen des Phosphonomethylglycins zu.

Das bei der Verseifung entstandene Reaktionsgemisch enthält neben N-Phosphonomethylglycin weitere Produkte bzw. Nebenprodukte. Die Carbonsäure R³COOH bildet sich bei Hydrolyse mit einem Überschuß an Säure oder bei neutraler Hydrolyse direkt oder bei Basenhydrolyse nach Ansäuern mit einer starken Säure, vorzugsweise auf einen pH-Wert <0,5. Die Abtrennung der Carbonsäure erfolgt dann in üblicher Weise, beispielsweise durch Abfiltrieren der in fester Form ausgefallenen Carbonsäure, Destillation oder Extraktion mit einem mit der wässrigen Phase nicht mischbaren organischen Lösungsmittel. Die Carbonsäure fällt in hoher Reinheit an und kann problemlos wieder zur Herstellung der Verbindung der Formel III eingesetzt werden. Auch das organische Lösungsmittel aus Schritt (a) kann nach der Extraktion der Verbindung I problemlos recycliert werden. Vorzugsweise wird das Lösungsmittel aus Schritt (a) nach Schritt (c) zurückgewonnen und recycliert. Zuvor wird das Lösungsmittel im Allgemeinen jedoch einer Destillation, Extraktion, Filtration und/oder Strippung unterworfen, um Verunreinigungen zu entfernen. Das erfindungsgemäße Verfahren bzw. jede Stufe für sich genommen kann kontinuierlich, diskontinuierlich oder als Semi-Batch-Verfahren durchgeführt werden. Es werden für solche Zwecke übliche Reaktionsbehälter verwendet, wie Rührkessel oder Rohrreaktoren, Extraktionskolonnen, Mixer-Settler oder Phasentrenner gegebenenfalls mit vorgeschalteten Mischvorrichtungen oder in den Rohrreaktor eingebauten Mischelementen.

Das erfindungsgemäße Verfahren zeichnet sich durch einfache Prozessführung und preiswerte Einsatzstoffe aus. Als Abfall fällt lediglich ein anorganisches Chlorid an und die Schutzgruppen, die Acylreste des Triacylphosphids der Formel III können in einfacher Weise recycliert werden. Das Verfahren ergibt N-Phosphonomethylglycin in sehr kurzen Reaktionszeiten und hohen Ausbeuten von mehr als 90 %, ausgehend von dem Hexahydrotriazin der Formel II.

Durch die Extraktion des Wertprodukts in eine wässrige Phase vor der Verseifung wird die Zersetzung des in (a) verwendeten organischen Lösungsmittels vermieden. Es sind keine milden Verseifungsbedingungen erforderlich und die unter ökologischen Gesichtspunkten vorteilhafte neutrale oder alkalische Verseifung, bei der das Mono-ammoniumsalz bzw. das Mononatriumsalz des N-Phosphonomethylglycins entsteht, ist problemlos anwendbar. Beide Salze können durch Zugabe nur eines Äquivalents Säure ausgefällt werden, was die Salzfracht der Abwässer und auch die Einsatzstoffkosten reduziert.

Die nachfolgenden Beispiele erläutern die Erfindung, ohne sie zu beschränken.

### Beispiel 1: Umsetzung von Triazin mit Phosphit

In einem 2 1-Rührkolben mit Teflonblattrührer und Rückflußkühler wurden 284 g Ammoniumbenzoat in 1000 ml 1,2-Dichlorethan vorgelegt und unter Stickstoffatmosphäre wurden im Verlauf von 30 min 91,5 g Phosphortrichlorid zugetropft. Die Temperatur stieg dabei auf maximal 36 °C. Anschließend wurde noch 30 min bei 25 bis 36°C nachgerührt. Der Ansatz wurde über eine Drucknutsche filtriert und der Filterkuchen wurde unter Stickstoff noch zweimal mit je 500 g Dichlorethan nachgewaschen (2054 g Filtrat).

In einem 2 1-Rührkolben mit Teflonblattrührer und Rückflußkühler wurde das Filtrat bei Raumtemperatur vorgelegt und das Hexahydrotriazin 6 (X = CN, 45,54 g) wurde zugegeben. Unter Rühren wurde in 30 min auf 80 °C erhitzt und 30 min bei 80 °C nachgerührt. Man ließ die Lösung erkalten und setzte sie direkt im Anschluß weiter um.

### Beispiel 2: Extraktionsstufe

150 g der gemäß Beispiel 1 erhaltenen Lösung (enthaltend 0,051 mol P) wurden mit 28 g Wasser oder wässriger Lösung wie in Tabelle 1 angegeben gerührt. Anschließend wurden die Phasen getrennt und einzeln analysiert durch P-Elementaranalyse und quantitative HPLC auf Benzoesäure. Man erhielt die in der Tabelle angegebenen Ergebnisse.

**Tabelle 1**

| | | | | freie Benzoesäure | | |
|---|---|---|---|---|---|---|
| Versuch Nr. | Wässrige Lösung | Reaktionszeit | Reaktionstemperatur | % von Gesamt | Wasserphase | Anteil P in Dichlorethan-Phase |
| 1 | Wasser | 10 min | 50 °C | 45,7 % | 7,3 % | 3,8 % |
| 2 | Wasser | 2 h | 50 °C | 46,0 % | 7,3 % | 1,5 % |
| 3 | Wasser | 10 min | Rückfluß | 46,7 % | 7,2 % | 1,3 % |
| 4 | Wasser | 2 h | Rückfluß | 50,4 % | 5,5 % | 1,2 % |
| 5 | 20 % HCl | 10 min | Rückfluß | 57,3 % | 5,4 % | 0,2 % |
| 6 | 20 % HCl | 2 h | Rückfluß | 78,0 % | 5,4 % | 0,2 % |

Die Spalten unter "freie Benzoesäure- geben an, wieviel Prozent der theoretisch in Form des Phosphits zugegebenen Menge an Benzoesäure bereits nach der Extraktion in ungebundener Form gelöst vorliegen. Die Spalte Wasserphase gibt an, welcher Anteil davon noch in der Wasserphase gelöst ist. Die letzte Spalte gibt an, welcher Anteil des gesamten Phosphors nach der Extraktion noch in der organischen Phase verbleibt.

### Beispiel 3: Verseifungsstufe mit Wasser

Die gemäß Beispiel 2, Versuch Nr. 2 erhaltene Wasserphase wurde in einem 10 ml-Druckreaktor weiter erhitzt. Die Reaktionsbedingungen sind der Tabelle 2 zu entnehmen. Der Reaktionsaustrag wurde 2-mal bei 50 °C mit Toluol extrahiert und anschließend durch quantitative HPLC und quantitative ¹H-NMR-Analyse auf Phosphonomethylglycin analysiert. Die Ergebnisse sind in Tabelle 2 dargestellt. Zur Isolierung des N-Phosphonomethylglycins wurde der Reaktionsaustrag auf pH = 1,0 eingestellt, das N-Phosphonomethylglycin abfiltriert und gewaschen.

**Tabelle 2**

| Reaktionstemperatur | Reaktionszeit | Ausbeute | |
|---|---|---|---|
| | | analysiert | isoliert |
| 150 °C | 4 h | 39 % | 30 % |
| 150 °C | 1 h | 59 % | 57 % |
| 150 °C | 20 min | 75 % | 72 % |
| 140 °C | 1 h | 74 % | 71 % |
| 130 °C | 1 h | 61 % | 55 % |

### Beispiel 4: Verseifungsstufe mit alkalischen Bedingungen

Man gab zu der gemäß Beispiel 2, Versuch Nr. 2 erhaltenen Wasserphase 0,051 mol 50 %ige Natronlauge und erhitzte die Reaktionsmischung in einem Druckreaktor weiter. Die Reaktionsbedingungen sind Tabelle 3 zu entnehmen. Der Reaktionsaustrag wurde durch quantitative HPLC und quantitative ¹H-NMR Analyse auf Phosphonomethylglycin analysiert (Syntheseausbeute). Die Ergebnisse sind in Tabelle 3 zusammengestellt. Zur Isolierung des Phosphonomethylglycins extrahiert man dreimal bei 60 °C und pH=2,5 mit 1,2-Dichlorethan, stellt den pH-Wert anschließend auf pH=1,0 ein, gibt etwas Methanol hinzu, rührt 3 Stunden bei 40 °C nach, filtriert das Phosphonomethylglycin ab und wäscht den Rückstand mit Eiswasser.

**Tabelle 3**

| Reaktionstemperatur | Reaktionszeit | Ausbeute | |
|---|---|---|---|
| | | in Synthese | isoliert |
| 180 °C | 20 min | 43 % | 24 % |
| 150 °C | 2 h | 87 % | 81 % |
| 150 °C | 30 min | 90 % | 85 % |
| 150 °C | 15 min | 92 % | 88 % |
| 140 °C | 1 h | 71 % | 60 % |
| 130 °C | 1 h | 50 % | 38 % |

## Patentansprüche

1. Verfahren zur Herstellung von N-Phosphonomethylglycin, wobei man
a) ein Hexahydrotriazinderivat der Formel II 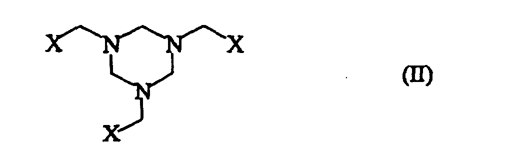 worin X für CN, COOZ, CONR¹R² oder CH₂OY steht,
Y für H, einen aliphatischen oder aromatischen Acylrest oder eine C₁-C₆-Alkylgruppe steht;
Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
R¹ und R², die gleich oder verschieden sein können, für H oder C₁-C₄-Alkyl stehen,
mit einem Triacylphosphit der Formel m
P(OCOR³)₃ (III)
worin die Reste R³, die gleich oder verschieden sein können, für C₁-C₁₈-Alkyl oder Aryl, das gegebenenfalls subtituiert ist durch C₁-C₄-Alkyl, NO₂ oder OC₁-C₄-Alkyl, stehen,
in einem organischen Lösungsmittel umsetzt,
b) das erhaltene Reaktionsgemisch mit Wasser oder einer wässrigen Lösung einer Säure oder einer wässrigen Lösung einer Base extrahiert,
c) die Phasen trennt und
d) das in der Wasserphase enthaltene Produkt hydrolysiert.

2. Verfahren nach Anspruch 1, bei dem man nach Schritt (d) das N-Phosphonomethylglycin aus der Wasserphase gewinnt.

3. Verfahren nach Anspruch 2, wobei das N-Phosphonomethylglycin durch Einstellen des pH-Wertes auf einen Wert im Bereich von 0,5 bis 2,0 ausgefällt wird.

4. Verfahren nach einem der Ansprüche 1 bis 3, bei dem, falls X in Verbindung II für CH₂OY steht, das nach Schritt (d) erhaltene Produkt oxidiert wird.

5. Verfahren nach einem der Ansprüche 1 bis 4, bei dem die Extraktion gemäß Schritt (b) bei einer Temperatur von Raumtemperatur bis zur Rückflußtemperatur des Gemisches durchgeführt wird.

6. Verfahren nach einem der Ansprüche 1 bis 5, bei dem die Hydrolyse gemäß Schritt (d) unter neutralen oder alkalischen Bedingungen durchgeführt wird.

7. Verfahren nach einem der Ansprüche 1 bis 6, bei dem die Hydrolyse gemäß Schritt (d) bei höherer Temperatur als die Extraktion gemäß Schritt b) durchgeführt wird.

8. Verfahren nach Anspruch 7, bei dem die Temperatur in Schritt d) im Bereich von 100°C bis 180 °C liegt.

9. Verfahren nach einem der Ansprüche 1 bis 8, bei dem als Lösungsmittel ein chlorierter Kohlenwasserstoff, bevorzugt 1,2-Dichlorethan, verwendet wird.

10. Verfahren nach einem der Ansprüche 1 bis 9, bei dem als Triacylphosphit der Formel III Benzoylphosphit verwendet wird.

11. Verfahren nach einem der Ansprüche 1 bis 10, bei dem X für CN oder COOZ steht.

12. Verfahren nach einem der Ansprüche 1 bis 11, bei dem R³ für Phenyl, das gegebenenfalls durch C₁-C₄-Alkyl, NO₂ oder OC₁-C₄-Alkyl substituiert ist, oder für CH₃ steht.

13. Verfahren nach einem der Ansprüche 1 bis 12, bei dem man die Verbindungen der Formeln II und III in im Wesentlichen äquivalenten Mengen einsetzt.

14. Verfahren nach einem der Ansprüche 1 bis 13, bei dem das Lösungsmittel aus Schritt (a) nach Schritt (c) zurück gewonnen und recycliert wird.

## Claims

1. A process for preparing N-phosphonomethylglycine which comprises
a) reacting a hexahydrotriazine derivative of the formula II 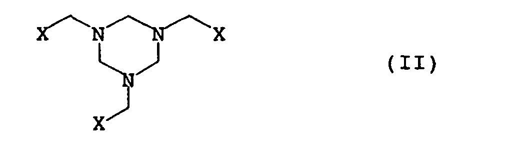 in which X is CN, COOZ, CONR¹R² or CH₂OY,
Y is H, an aliphatic or aromatic acyl radical or a C₁-C₆-alkyl group;
Z is H, an alkali metal, an alkaline earth metal, C₁-C₁₈-alkyl or aryl which is unsubstituted or substituted by C₁-C₄-alkyl, NO₂ or OC₁-C₄-alkyl;
R¹ and R² may be identical or different and are H or C₁-C₄-alkyl,
with a triacyl phosphite of the formula III
P(OCOR³)₃ (III)
in which the radicals R³, which may be identical or different, are C₁-C₁₈-alkyl or aryl which is unsubstituted or substituted by C₁-C₄-alkyl, NO₂ or OC₁-C₄-alkyl
in an organic solvent,
b) extracting the resulting reaction mixture with water or an aqueous solution of an acid or an aqueous solution of a base,
c) separating the phases and
d) hydrolyzing the product contained in the aqueous phase.

2. A process as claimed in claim 1 where, after step (d), the N-phosphonomethylglycine is obtained from the aqueous phase.

3. A process as claimed in claim 2 where the N-phosphonomethylglycine is precipitated out by adjusting the pH to a value in the range from 0.5 to 2.0.

4. A process as claimed in any of claims 1 to 3 where, if X in compound II is CH₂OY, the product obtained after step (d) is oxidized.

5. A process as claimed in any of claims 1 to 4 where the extraction according to step (b) is carried out at a temperature of from room temperature to the reflux temperature of the mixture.

6. A process as claimed in any of claims 1 to 5 in which the hydrolysis according to step (d) is carried out under neutral or alkaline conditions.

7. A process as claimed in any of claims 1 to 6 where the hydrolysis according to step (d) is carried out at a temperature higher than that of the extraction according to step (b).

8. A process as claimed in claim 7 where the temperature in step (d) is in the range from 100°C to 180°C.

9. A process as claimed in any of claims 1 to 8 where the solvent used is a chlorinated hydrocarbon, preferably 1,2-dichloroethane.

10. A process as claimed in any of claims 1 to 9 where the triacyl phosphite of the formula III used is benzoyl phosphite.

11. A process as claimed in any of claims 1 to 10 where X is CN or COOZ.

12. A process as claimed in any of claims 1 to 11 where R³ is phenyl which is unsubstituted or substituted by C₁-C₄-alkyl, NO₂ or OC₁-C₄-alkyl or is CH₃.

13. A process as claimed in any of claims 1 to 12 where the compounds of the formulae II and III are employed in substantially equivalent amounts.

14. A process as claimed in any of claims 1 to 13 where the solvent from step (a) is recovered after step (c) and recycled.

## Revendications

1. Procédé de préparation de N-phosphonométhylglycine, dans lequel
a) on fait réagir dans un solvant organique un dérivé d'hexahydrotriazine de la formule II : 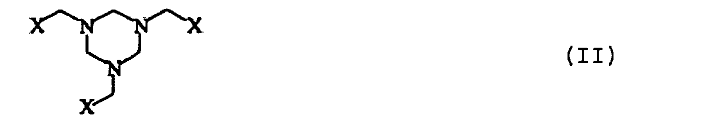 dans laquelle X représente CN, COOZ, CONR¹R² ou CH₂OY,
Y représente H, un radical acyle aliphatique ou aromatique ou un groupe alkyle en C₁-C₆,
Z représente H, un métal alcalin, un métal alcalino-terreux, ou un groupe alkyle en C₁-C₁₈ ou aryle, qui est éventuellement substitué par de l'alkyle en C₁-C₄, du NO₂ ou du O-alkyle en C₁-C₄,
R¹ et R², qui peuvent être identiques ou différents, représentent H ou un groupe alkyle en C₁-C₄,
avec un phosphite de triacyle de la formule III :
P(OCOR³)₃ (III)
dans laquelle les radicaux R³, qui peuvent être identiques ou différents, représentent un groupe alkyle en C₁-C₁₈ ou aryle, qui est éventuellement substitué par de l'alkyle en C₁-C₄, du NO₂ ou du O-alkyle en C₁-C₄,
b) on extrait le mélange réactionnel obtenu par de l'eau ou une solution aqueuse d'un acide ou une solution aqueuse d'une base,
c) on sépare les phases, et
d) on hydrolyse le produit contenu dans la phase aqueuse.

2. Procédé suivant la revendication 1, dans lequel, après l'étape (d), on produit la N-phosphonométhylglycine à partir de la phase aqueuse.

3. Procédé suivant la revendication 2, dans lequel on fait précipiter la N-phosphonométhylglycine par ajustement du pH à une valeur de l'ordre de 0,5 à 2,0.

4. Procédé suivant l'une des revendications 1 à 3, dans lequel, dans le cas où X dans le composé II représente CH₂OY, on oxyde le produit obtenu selon l'étape (d).

5. Procédé suivant l'une des revendications 1 à 4, dans lequel l'extraction conformément à l'étape (b) est effectuée à une température allant de la température ambiante jusqu'à la température de reflux du mélange.

6. Procédé suivant l'une des revendications 1 à 5, dans lequel l'hydrolyse selon l'étape (d) est effectuée dans des conditions neutres ou alcalines.

7. Procédé suivant l'une des revendications 1 à 6, dans lequel l'hydrolyse selon l'étape (d) est effectuée à une température supérieure à l'extraction selon l'étape (b).

8. Procédé suivant la revendication 7, dans lequel la température de l'étape (d) est de l'ordre de 100°C à 180°C.

9. Procédé suivant l'une des revendications 1 à 8, dans lequel on utilise, comme solvant, un hydrocarbure chloré, de préférence du 1,2-dichloroéthane.

10. Procédé suivant l'une des revendications 1 à 9, dans lequel on utilise, comme phosphite de triacyle de la formule III, du phosphite de benzoyle.

11. Procédé suivant l'une des revendications 1 à 10, dans lequel X représente CN ou COOZ.

12. Procédé suivant l'une des revendications 1 à 11, dans lequel R³ représente un groupe phényle, qui est éventuellement substitué par de l'alkyle en C₁-C₄, du NO₂ ou du O-alkyle en C₁-C₄, ou un groupe CH₃.

13. Procédé suivant l'une des revendications 1 à 12, dans lequel on met en oeuvre les composés des formules II et III en quantités sensiblement équivalentes.

14. Procédé suivant l'une des revendications 1 à 13, dans lequel le solvant de l'étape (a) est récupéré après l'étape (c) et recyclé.
